# EUROPEAN PATENT APPLICATION

(11) **EP 4 119 277 A1**
(43) Date of publication of application: **18.01.2023**
(21) Application number: 21767016.5
(22) Date of filing: 09.03.2021
(51) Int. Cl.: B23K 20/00

(54) **SOLID-PHASE SPOT-WELDING METHOD AND SOLID-PHASE SPOT-WELDING DEVICE**

(30) Priority: 13.03.2020 JP 2020043958
(71) Applicant: Osaka University, Suita-shi Osaka 565-0871 (JP)
(72) Inventor: FUJII, Hidetoshi, Suita-shi, Osaka 565-0871 (JP); MORISADA, Yoshiaki, Suita-shi, Osaka 565-0871 (JP); KAMAI, Masayoshi, Suita-shi, Osaka 565-0871 (JP); AIBARA, Takumi, Suita-shi, Osaka 565-0871 (JP)
(74) Representative: Mewburn Ellis LLP
(86) International application number: PCT/JP2021/009182
(87) International publication number: WO 2021/182444

(57) **Abstract**

The present invention provides: a solid-phase spot-welding method with which the welding temperature can be controlled accurately and with which a reduction in the welding temperature can be achieved, regardless of the type of metal material being welded; and a solid-phase spot-welding device that can be used suitably in this solid-phase spot-welding method. This solid-phase welding method involves overlapping metal plate materials and carrying out spot-welding, and is characterized by having a welding preparation step in which two or more metal plate materials are held in a state in which same overlap one another, thereby forming an interface to be welded, a temperature-raising step in which a pair of electrodes are used and the interface to be welded is heated by supplying a current by a direct method, an indirect method, or a series method, thereby forming a softened region in the vicinity of the interface to be welded, and a stress application step in which an external stress greater than or equal to the yield strength of the metal plate materials at a desired welding temperature is applied to the softened region, wherein the metal plate materials are welded to each other by subjecting the softened region to local deformation.

## Description

### TECHNICAL FIELD

The present invention relates to a method for solid-phase spot-welding between metal materials and a solid-phase spot-welding device that can be suitably used for the solid-phase spot-welding method.

### BACKGROUND ART

Conventionally, a resistance spot-welding, which is a kind of resistance welding methods, is widely used for spot-welding of metal plates. In the resistance spot-welding, two overlapping metal plates are sandwiched between electrodes from above and below, and the Joule heat generated by passing a large current from the electrodes to the metal plates melts the region to be welded to form a welded portion.

The resistance spot-welding is an indispensable technique for manufacturing various metal structures including the automobile industry, but since the spot-welded portion has a melt-solidified structure, the spot-welded portion generally lacks in strength and toughness when compared with the base material (material to be welded), and a softened region which is also called as a heat-affected zone is formed on the outer end of the spot-welded region. Though these characteristics do not pose a big problem when the strength of the material to be welded is low or when the strength and reliability required for the metal structure are not high, in recent years, since increase of the strength of steel sheets and the like has been rapidly required, the deterioration of the mechanical properties of the welded portion has become a serious problem.

Regarding to the problem, for example, in Patent Document 1 (Japanese Unexamined Patent Publication No. 2013-103273), there is proposed a resistance spot-welding method for welding a sheet bundle of two or more steel sheets which are piled up by sandwiching with a pair of welding electrodes, pressurizing, and energizing includes a main process for forming a nugget of a prescribed diameter by energization, a middle process for pressurizing the nugget while non-energizing, and a post-process for re-energizing the nugget, and in the post-process, the maximum temperature TT of the interface between the nugget and a corona bond on a non-melting part side satisfies TT > A_{c3}.

In the resistance spot-welding method described in Patent Document 1, it is said that when the welded portion is cooled and solidified without energization while being pressurized by an electrode, or the temperature is raised to a sufficiently high temperature by re-energization so as not to exceed the melting point, it is possible to manufacture a resistance spot-welded joint with high cross tensile strength in a shorter time than the conventional temper energization for two or more plate sets including at least one high tension steel plate.

Further, in Patent Document 2 (Japanese Unexamined Patent Publication No. 2007-332452), there is proposed a high-tensile steel sheet for resistance welding which includes C: 0.15 to 0.25%, Si: 0.1 to 2.5%, Mn: 0.10 to 1.0%, Cr: 0.5 to 3.5%, and the balance being Fe and unavoidable impurities, has a tensile strength of 1180 MPa or more, and in the same time, that the contents of Mn and Cr satisfy the equation of Mn / (Mn + Cr) < 0.50, and a resistance welding method for the high-tensile steel plate for resistance welding.

In the high-tensile steel plate for resistance welding described in Patent Document 2, it is said that it is possible to provide the high-tensile steel sheet having excellent resistance weldability where the strength of the resistance welded portion and the high strength of the steel sheet can be established with almost no decrease of welding strength even when C is added up to 0.25% by suppressing the addition amount of Mn and adding Cr according to the decrease of Mn, and can secure the joint strength of the welded portion by resistance welding even though it is a high tension steel sheet of 1180 MPa class or higher.

### CITATION LIST

### Patent Document

Patent Document 1: JP2013-103273A
Patent Document 2: JP2007-332452A

### SUMMARY OF THE INVENTION

### Problem to be solved by the invention

However, in the resistance spot-welding method disclosed in Patent Document 1, although the mechanical properties of the spot-welded portion of the high-strength steel sheet are improved to some extent by the thermal history and the like, the formation of the melt-solidified structure and the heat-affected zone in the spot-welded portion cannot be suppressed, and it is extremely difficult to fully utilize the strength and toughness of the high-strength steel sheet.

Further, the high-tensile steel sheet for resistance welding disclosed in Patent Document 2 is designed so that the strength of the resistance welded portion is guaranteed, but in addition to being impractical to apply the high-tensile steel sheet for resistance welding to all of the various metal structural members which are required to have a wide variety of characteristics, the tensile strength remains in the 1180 MPa class.

Furthermore, in resistance welding (resistance spot-welding), it is an indispensable requirement to melt the region to be welded, and it is also a large problem that cracks or the like occur in the welded portion due to melt solidification. In particular, due to this problem, it cannot be applied to steels having a high carbon content, and steel materials whose strength has been increased by cheap carbon cannot be effectively used industrially.

In view of the above-mentioned problems in the prior art, an object of the present invention is to provide a solid-phase spot-welding method with which the welding temperature can be controlled accurately and with which a reduction in the welding temperature can be achieved, regardless of the type of metal material being welded, and a solid-phase spot-welding device that can be used suitably in this solid-phase spot-welding method.

### Solution to Problem

As a result of intensive study on the solid-phase spot-welding method of metal materials in order to achieve the above object, the present inventors have found that it is extremely effective to locally energize and heat the region to be welded to be softened, and at the same time, to form a new surface by applying stress to the interface to be welded which is in the state of solid-phase, and have arrived at the present invention.

Namely, the present invention can provide a solid-phase spot-welding method of metal plate materials which is a solid-phase welding method where overlapping metal plate materials and carrying out spot-welding, and is characterized in that the method includes
a welding preparation step in which two or more metal plate materials are held in a state in which same overlap one another, thereby forming an interface to be welded,
a temperature raising step in which a temperature of the interface to be welded is raised by energization by a pair of electrodes to form a softened region in the vicinity of the interface to be welded, and
a stress application step in which an external stress greater than or equal to the yield strength of the metal plate materials at a desired welding temperature is applied to the softened region,
wherein the metal plate materials are welded to each other by subjecting the softened region to local deformation.

The welding method of the present invention is a solid-phase spot-phase welding method, in which the temperature of the interface to be welded is raised by energization, but unlike the conventional resistance spot-welding, the interface to be welded is not melted. By welding in a solid-phase state (welding at a lower temperature) without melting the interface to be welded, it is possible to suppress welding burns formed on the surface of the welded portion and improve the appearance of the welded portion. Here, the method of energization is not particularly limited as long as the effect of the present invention is not impaired, and various conventionally known direct methods, indirect methods, series methods and the like can be used, and an energization method similar to these can also be used.

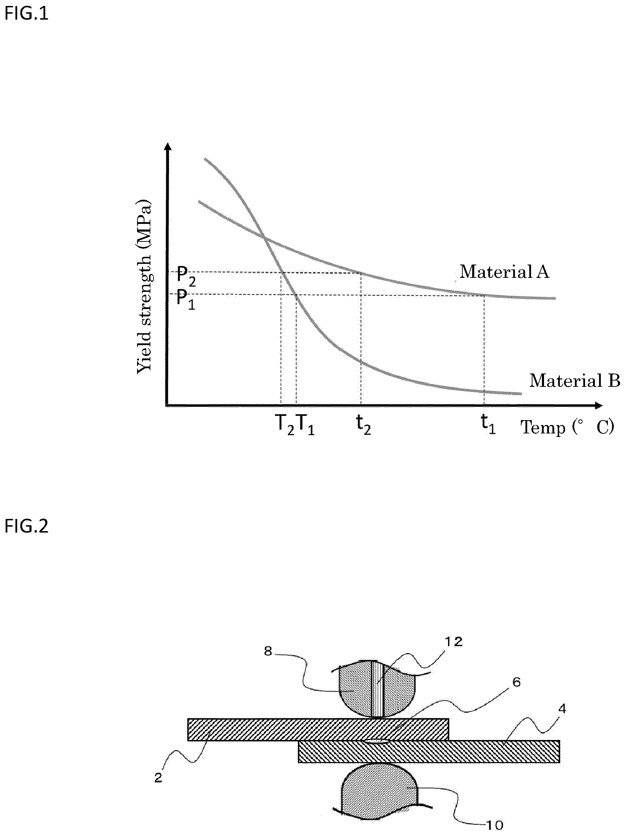

In the solid-phase spot-welding method of the present invention, in the welding process, a large pressure is applied to determine the welding temperature, rather than simply applying a small pressure from the electrode to fix the material to be welded or to ensure the adhesion of the interface to be welded. The mechanism for determining the welding temperature is schematically shown in FIG. 1. FIG. 1 is a graph schematically showing the relationship between the yield stress of a metal material and the temperature. The yield stress of the metal material changes depending on the temperature, and the relationship between the yield stress and the temperature differs for each metal material.

Focusing on the deformation resistance (yield stress) of the metal plate as the material to be welded shown in FIG. 1, it is low when the temperature is high and high when the temperature is low. That is, when a pressure is applied in the vicinity of the interface to be welded, the deformation starts at a low temperature by applying a higher pressure, and as a result, a new surface is formed at a low temperature and the welding is achieved. In FIG. 1, specifically, when the pressure P₁ is applied to the interface to be welded, the welding temperature of the material A becomes t₁, and when the pressure is increased to P₂, the welding temperature drops to t₂. Further, with respect to the material B, the welding temperature is lowered from T₁ to T₂ by increasing the pressure from P₁ to P₂.

That is, focusing on the deformation resistance of the metal plate material to be welded, it is low when the temperature is high and high when the temperature is low. When a pressure is applied in the vicinity of the interface to be welded, the deformation starts at a low temperature by applying a higher pressure, and as a result, the welding is achieved at a low temperature. The solid-phase spot-welding method of the metal plate material of the present invention is based on the mechanism clarified by the present inventors, and since the deformation resistance and the temperature of a specific metal plate material have a substantially constant relationship, the welding temperature can be accurately controlled by the applied pressure in the vicinity of the interface to be welded. The pressing force required to locally deform the vicinity of the interface to be welded is also affected by the thickness of the metal plate material, and is large in the case of a thick plate and small in the case of a thin plate.

Further, in the solid-phase spot-welding method of the present invention, it is preferable to apply the external stress by a pressing part arranged inside or around at least one of the electrodes. The external pressure may be applied by using the electrode, but it is necessary to pay attention to the life of the electrode. In the electrode used in conventional resistance spot-welding, since stress is applied to such an extent that the materials to be welded are brought into contact with each other, the effect of the applied stress on the life of the electrode is not large. On the other hand, the stress applied by the solid-phase spot-welding method of the present invention is intended to locally deform the softened region formed by raising the temperature by energization heating to weld the metal plates to each other, it is necessary to set the external stress to be equal to or higher than the yield strength of the metal plate material at the desired welding temperature. As a result, when the electrode used in conventional resistance spot-welding is used, the strength and hardness of the electrode from room temperature to the welding temperature are not sufficient, and the life is extremely shortened.

In addition, by separately configuring the electrode and the pressing part, the timing of applying external stress to the interface to be welded can be easily controlled. Here, the timing at which the external stress is applied is not particularly limited as long as the effect of the present invention is not impaired, but may be appropriately set from the viewpoint of forming the new surface at the interface to be welded. The external stress may be applied after the energization, may be applied during the energization, or may be applied before the energization. Here, by applying the external stress before the energization, the welding temperature becomes a value corresponding to the external stress, and the external stress can be used as a trigger for determining the timing of starting the welding. In addition, by applying the external stress before the energization, the interface to be welded becomes closer and the electrical resistance decreases, so that an energization path can be positively formed in the region, and the temperature of the vicinity of the interface to be welded can be further raised efficiently. Further, the external stress may be continuously applied at a constant pressure, may be applied instantaneously, or for example, may be applied in a pulse shape.

Furthermore, by separately configuring the electrode and the pressing part, it is possible to appropriately control the pushing amount and the like by the pressing part. Since the amount of deformation of the interface to be welded depends on the pushing amount of the pressing part, the formation of the new surface can be promoted by increasing the pushing amount. On the other hand, when the pushing amount of the pressing part increases, a concave depression is formed on the surface of the welded portion, so that it is preferable to reduce the pushing amount in appearance. That is, it is preferable to optimize the pushing amount from the viewpoint of forming the new surface and the surface shape of the welded portion.

Further, in the solid-phase spot-welding method of the present invention, it is preferable to apply the external stress by a pressing part arranged around or inside at least one of the electrodes. As described above, when the electrodes used in the conventional resistance spot-welding are used, since the life of the electrodes is shortened, it is preferable to separate the pressing part to which the external stress is applied and the electrode portion to be energized. In this case, it is not necessary to design the material, shape, and the like of the pressing part from the viewpoint of "energization", and the material, shape, etc. can be optimized from the viewpoint of "life".

Here, the material of the pressing part is not particularly limited as long as the effect of the present invention is not impaired, and for example, various tool steels, cemented carbides, heat-resistive steels, ceramics and the like can be used, and general punches and dies and the like can also be used. Further, in order to suppress adhesion and reaction with the material to be welded, it is preferable to form an appropriate hard ceramic film on the surface of the pressing part. The hard ceramic film is not particularly limited as long as the effect of the present invention is not impaired, and for example, a PVD film and the like used in various cutting tools, or the like can be used.

Further, in the solid-phase spot-welding method of the present invention, it is preferable that the external stress is the flow stress of the metal plate material at the welding temperature. By using the flow stress of the metal plate at the welding temperature as the external stress, the continuous deformation in the vicinity of the interface to be welded is started at the set welding temperature, and the solid-phase welding due to abutment between the new surfaces can be achieved stably with the minimum pressure.

Further, in the solid-phase spot-welding method of the present invention, it is preferable that a convex portion is provided on at least one of the metal plate materials, and the interface to be welded is formed by bringing the convex portion into contact with the other metal plate. By providing the convex portion on the welded portion of the metal plate material, the current is concentrated on the convex portion when the power is applied, and the temperature in the vicinity of the interface to be welded can be efficiently raised. In addition, the convex portion is plastically deformed by the external stress applied from the pressing part, and the solid-phase welded portion can be easily formed.

The method for forming the convex portion is not particularly limited as long as the effect of the present invention is not impaired, and various conventionally known processing methods can be used. For example, an annular concave portion may be provided on the surface of the metal plate material and a convex portion may be formed at the center thereof, or the concave portion may be formed by using an appropriate press working, or the like. Further, the shape and size of the concave portion may be appropriately adjusted according to the shape of the welded portion, desired joint characteristics, and the like.

Further, in the solid-phase welding method of the present invention, it is preferable to lower the temperature of the surface of the metal plate material in the stress application step by cooling after the temperature rise. In the stress application step, it is necessary to plastically deform the softened region in the vicinity of the interface to be welded to achieve welding between the new surfaces, but, when the surface of the metal plate material to be pushed by the pressing part is softened, the softened metal material is discharged in the form of burrs, and the softened region in the vicinity of the interface to be welded cannot be sufficiently plastically deformed, which makes difficult to achieve welding between the new surfaces.

To the contrary, the temperature in the vicinity of the surface of the metal plate material can be lowered by providing a period of cooling time after heating the region to be welded by energization in the temperature raising step. Here, the temperature in the vicinity of the interface to be welded also decreases during cooling, but since the cooling rate in the vicinity of the surface is higher than the cooling rate in the vicinity of the interface to be welded, the surface of the metal plate material can be hardened while maintaining the softened region in the vicinity of the interface to be welded to some extent. As a result, by press-fitting the pressing part from the surface of the metal plate material that has been hardened to some extent, the stress can be sufficiently transmitted and the softened region in the vicinity of the interface to be welded can be plastically deformed. Regarding the cooling after the energization, air cooling may be performed by leaving it as it is after the energization is stopped, or forced cooling may be performed by various conventionally known methods such as blowing air.

Further, in the solid-phase spot-welding method of the present invention, it is preferable that there provide a cylindrical molding jig arranged so as to include the electrode, and after the stress application step, the molding jig is pressed against the metal plate material to reduce the gap between the metal plate materials caused by the local deformation.

In the solid-state welding method of the present invention, since it is necessary to apply an external stress to the softened region formed by raising the temperature by the energization to locally deform the softened region to form the new surface, the material to be welded flows out around the welded area due to the local deformation to form a gap between the upper and lower metal plate materials. In this case, the gap between the metal plate materials can be reduced by pressing the outer periphery of the welded region with the cylindrical molding jig arranged so as to include the electrode. The material, shape, and size of the molding jig are not particularly limited as long as the effects of the present invention are not impaired, and may be appropriately selected according to the material, shape, size, and the like of the material to be welded. Further, the pressing force by the molding jig may be appropriately set so as to reduce the gap formed by the welding process according to the material, shape, size, and the like of the material to be welded.

Further, in the solid-phase spot-welding method of the present invention, it is preferable that the metal plate material contains an iron-based metal plate material and the welding temperature is set to A₁ point or less of the iron-based metal plate material. In conventional resistance spot-welding, since the material to be welded melts, it is not possible to suppress the formation of a molten solidified structure and heat-affected zone at the spot-welded portion, and it is extremely difficult to fully utilize the toughness and the strength of ion-based metal plate material such as high-tensile steel plates. Further, with respect to the steel having a high carbon content, since cracks and the like occur in the welded portion due to melt solidification, it is not possible to effectively industrially use the steel material where the strength has been increased by inexpensive carbon. On the other hand, in the solid-phase spot-welding method of the present invention, since the metal plate material which is a material to be welded does not melt, it can be extremely efficiently suppressed the reduction in strength due to the welding process, even high-tensile steel sheets and medium- and high-carbon steel sheets.

Further, in the solid-phase spot-welding method of the present invention, dissimilar material welding is preferable. Generally, when dissimilar metals are melt-welded, a fragile intermetallic compound layer is formed at the welded interface, and the mechanical properties of the joint are significantly deteriorated. Since this phenomenon is remarkable, for example, in steel-aluminum, copper-aluminum, titanium-aluminum, titanium-steel, and the like, which have a wide range of industrial applications, it is difficult to form good spot-welded portion by the resistance spot-welding. On the other hand, in the solid-phase spot-welding method of the present invention, since the metal plate material is not melted and the welding is achieved by low temperature welding by abutting between the new surfaces, it is possible to suppress the formation of the intermetallic compound extremely effectively.

Further, in the solid-phase spot-welding method of the present invention, it is preferable to suppress the change in the welding temperature by the following (1) and/or (2).
(1) Constant current density control where the current value of the energization increases as the contact area at the interface to be welded increases
(2) Constant external stress control where the external load in the stress application step increases as the contact area at the interface to be welded increases

When the temperature in the vicinity of the interface to be welded is raised by the energization while an external stress equal to or higher than the yield stress of the metal plate material at the desired welding temperature is applied to the region to be welded of the metal plate material, the contact situation of the surfaces of the metal plate materials at the interface to be welded changes from moment to moment. More specifically, since the contact area increases, the current density decreases. Further, when the external load is constant, the external stress decreases due to the increase in the contact area. Here, the decrease in the current density lowers the rate of temperature rise, and there is a case where it is difficult to set the desired welding temperature in the vicinity of the interface to be welded. Further, the decrease in the external stress raises the welding temperature determined by the external stress, and there is a case where it is difficult to accurately control the desired welding temperature.

On the other hand, according to the constant current density control where the current value of the energization increases as the contact area at the interface to be welded increases, the temperature in the vicinity of the interface to be welded can be raised to a desired welding temperature in a short time and uniformly. In addition, according to the constant external stress control where the external load in the stress application step increases as the contact area at the interface to be welded increases, the desired welding temperature can be controlled more accurately. The specific methods of constant current density control and the constant external stress control are not particularly limited as long as the effects of the present invention are not impaired, and various conventionally known methods can be used. For example, the current value and the external load may be set in multiple stages.

Furthermore, in the solid-phase spot-welding method of the present invention, it is preferable to have a protrusion on the bottom surface of the tip of the pressing part. By inserting the protrusion into the region to be welded and then further pressing the other region than the inserted region, the plastic deformation in the vicinity of the interface to be welded can be promoted, and the formation of defects can be suppressed. The shape of the bottom surface of the tip portion is not particularly limited as long as the effect of the present invention is not impaired, and for example, a shape proposed as a friction stir welding tool or a metal processing tool can be used.

The material, shape, and size of the metal plate material to be welded by the solid-phase spot-welding method of the present invention are not particularly limited as long as the effect of the present invention is not impaired, and all metal plate materials which are used in the conventional resistance spot-welding are targeted.

Further, the present invention also provides a solid-phase spot-welding device for metal plate materials, which is characterized by having:
an energization mechanism including a pair of electrodes capable of energization by a direct method, an indirect method or a series method, and
a pressurizing mechanism capable of applying pressure to the interface to be welded of the metal plate material heated by the energization mechanism.

The greatest feature of the solid-phase spot-welding device of the metal plate material of the present invention is to have a pressurizing mechanism capable of applying pressure to the interface to be welded of the metal plate material, separately from the energizing mechanism. Here, when the conventional resistance spot-welding device has a pressurizing mechanism, the pressurizing mechanism is mainly used for abutting the materials to be welded to fix the position (that is, not to apply pressure to the interface to be welded). On the other hand, the pressurizing mechanism in the solid-phase spot-welding device for metal materials of the present invention applies pressure to the softened region (interface to be welded) formed by raising the temperature by the energization to locally deform the softened region, and to weld the metal plate materials to each other.

Further, in the solid-phase spot-welding device for the metal plate material of the present invention, it is preferable that the tip of the pressurizing mechanism in contact with the metal plate material is any of tool steel, cemented carbide, nickel-based alloy, cobalt-based alloy and ceramics. The pressurizing mechanism is required to have the ability to locally deform the softened region to form the new surface at the interface to be welded and to have a long life. Here, by using any of tool steel, cemented carbide, nickel-based alloy, cobalt-based alloy, and ceramics for the tip of the pressurizing mechanism, sufficient strength and hardness can be ensured. Here, it is preferable to use the tool steel or the cemented carbide when the welding temperature is relatively low, and it is preferable to use the nickel-based alloy or the cobalt-based alloy when the welding temperature is relatively high, and it is preferable to use the ceramics when the welding temperature is higher. Further, by using the ceramics, it is possible to suppress the adhesion of the material to be welded and the reaction with the material to be welded. Bulk materials of these materials may be used for the tip of the pressurizing mechanism, and for example, a ceramic film may be formed on the surface of the tool steel.

Further, in the solid-phase spot-welding device for the metal plate material of the present invention, it is preferable that the temperature in the vicinity of the interface to be welded can be raised to 300 to 1000 °C by the energization mechanism, and the pressure can be controlled in the range of 100 to 1200 MPa by the pressurizing mechanism. By raising the temperature of the interface to be welded to 300 to 1000 °C, with respect to of various metal plate materials, it is possible to sufficiently lower the strength so as to cause local deformation by applying an external force (100 to 1200 MPa) to the interface to be welded by a small pressurizing mechanism.

Further, in the solid-phase spot-welding device for a metal plate material of the present invention, it is preferable that the pressure is the flow stress of the metal plate material at the welding temperature by setting the desired welding temperature. By using the flow stress of the metal plate material at the welding temperature as the external stress, the continuous deformation in the vicinity of the interface to be welded is started at the set welding temperature, and the solid-phase welding due to abutment between the new surfaces can be achieved stably with the minimum pressure.

The temperature dependence of the flow stress is unique to each metal material, and when the solid-phase spot-welding device keeps the flow stress at each temperature as a database to set the type of metal material and the desired welding temperature, the corresponding pressure can be determined. It is preferable to record at least a database of various iron-based materials in the solid-phase spot-welding device.

Further, in the solid-phase spot-welding device for a metal plate material of the present invention, it is preferable that the electrode has a substantially cylindrical shape and the pressurizing mechanism is arranged inside or around the electrode. By having the pressurizing mechanism inside or around the electrode having a substantially cylindrical shape, it is possible to efficiently apply the external stress to the softened region (interface to be welded) heated by the energization of the electrode. In addition, since the electrode and the pressurizing mechanism can be compactly integrated, the mechanism for contacting the metal plate material can be miniaturized. Here, it is preferable that the shape and specifications of the electrode are designed so that the surface of the metal plate material to the interface to be welded can be uniformly heated. By uniformly softening not only the interface to be welded but also the surface of the metal plate material to the interface to be welded, the local deformation by the pressurizing mechanism can be easily achieved.

Further, in the solid-phase spot-welding device for the metal plate material of the present invention, it is preferable to have the mechanism which suppresses the change in the welding temperature by the following (1) and/or (2).
(1) Constant current density control where the current value of the energization increases as the contact area at the interface to be welded increases
(2) Constant external stress control where the external load increases by the pressurizing mechanism as the contact area at the interface to be welded increases

When the temperature in the vicinity of the interface to be welded is raised by the energization while an external stress equal to or higher than the yield stress of the metal plate material at the desired welding temperature is applied to the region to be welded of the metal plate material, the contact situation of the surfaces of the metal plate materials at the interface to be welded changes from moment to moment. More specifically, since the contact area increases, the current density decreases. Further, when the external load is constant, the external stress decreases due to the increase in the contact area. Here, the decrease in the current density lowers the rate of temperature rise, and there is a case where it is difficult to set the desired welding temperature in the vicinity of the interface to be welded. Further, the decrease in the external stress raises the welding temperature determined by the external stress, and there is a case where it is difficult to accurately control the desired welding temperature.

On the other hand, according to the constant current density control where the current value of the energization increases as the contact area at the interface to be welded increases, the temperature in the vicinity of the interface to be welded can be raised to a desired welding temperature in a short time and uniformly. In addition, according to the constant external stress control where the external load in the stress application step increases as the contact area at the interface to be welded increases, the desired welding temperature can be controlled more accurately. The specific controlling mechanisms of constant current density control and the constant external stress control are not particularly limited as long as the effects of the present invention are not impaired, and various conventionally known controlling mechanisms can be used. For example, the controlling mechanisms which can set the current value and the external load in multiple stages may be employed.

Furthermore, in the solid-phase spot-welding device for a metal plate material of the present invention, it is preferable to have a protrusion on the bottom surface of the tip of the pressing part. By inserting the protrusion into the region to be welded and then further pressing the other region than the inserted region, the plastic deformation in the vicinity of the interface to be welded can be promoted, and the formation of defects can be suppressed. The shape of the bottom surface of the tip portion is not particularly limited as long as the effect of the present invention is not impaired, and for example, a shape proposed as a friction stir welding tool or a metal processing tool can be used.

### Effect of the invention

According to the present invention, it is possible to provide a solid-phase spot-welding method with which the welding temperature can be controlled accurately and with which a reduction in the welding temperature can be achieved, regardless of the type of metal material being welded, and a solid-phase spot-welding device that can be used suitably in this solid-phase spot-welding method.

### BRIEF EXPLANATION OF DRAWINGS

FIG. 1 is a graph which schematically shows the relationship between the yield stress of a metal material and the temperature.
FIG. 2 is a schematic cross-sectional view which shows one embodiment of the welding preparation step when using the direct method.
FIG. 3 is schematic cross-sectional view which shows one embodiment of the welding preparation step when using the indirect method.
FIG. 4 is a schematic cross-sectional view which shows one embodiment of the welding preparation step when using the series method.
FIG. 5 is a schematic cross-sectional view which shows one embodiment of the temperature raising step when using the direct method.
FIG. 6 is schematic cross-sectional view which shows one embodiment of the temperature raising step when using the indirect method.
FIG. 7 is a schematic cross-sectional view which shows one embodiment of the temperature raising step when using the series method.
FIG. 8 is a schematic cross-sectional view which shows one embodiment of the stress application step in the case that the pressing part is provided with only one welding electrode in the direct method.
FIG. 9 is a schematic cross-sectional view which shows one embodiment of the stress application step in the case that both welding electrodes are provided with the pressing part in the direct method (pattern 1).
FIG. 10 is a schematic cross-sectional view which shows one embodiment of the stress application step in the case that both welding electrodes are provided with the pressing part in the direct method (pattern 2).
FIG. 11 is a schematic diagram which shows the typical shape of the pressing part 12.
FIG. 12 is a schematic diagram which shows one embodiment of the solid-phase spot-welding device in the case of using the direct method.
FIG. 13 is an enlarged view of the vicinity of the welding electrode of the solid-phase welding device shown in FIG. 11.
FIG. 14 is a schematic cross-sectional view in the vicinity of the electrode of the solid-phase spot-welding device used in the example.
FIG. 15 is a schematic diagram of the central pressure shaft used in the example (constant external load).
FIG. 16 is an appearance photograph of the joint obtained in the example.
FIG. 17 is a cross-sectional macro photograph of the joint obtained in the example.
FIG. 18 is an SEM image of the base material of the joint obtained in the example.
FIG. 19 is an SEM image of the welded part of the joint obtained in the example.
FIG. 20 is a schematic diagram of the central pressure shaft used in the example (multi-step load control).
FIG. 21 is a cross-sectional macro photograph of the joint obtained in the example.
FIG.22 is a microstructure photograph of the welded portion of the joint obtained in the example.
FIG. 23 is an SEM image of the end of the welded portion of the joint obtained in 3750A.
FIG. 24 is a crystal orientation map of the end of the welded portion of the joint obtained in 3750A.
FIG. 25 is a graph which shows the hardness distribution of the welded portion of the joint obtained in the example.

### MODE FOR CARRYING OUT THE INVENTION

In the following, by referring the drawings, the typical embodiments of the solid-phase spot-welding method for a metal plate material and the solid-phase spot-welding device of the present invention are explained in detail, but the present invention is not limited thereto. In the following explanation, the same symbol is given to the same or corresponding parts, and there is a case where overlapping explanation is omitted. In addition, since these drawings are presented to explain the concept of the present invention, there are cases where size and ratio of the structural elements are different from the real case.

### (1) Solid-phase spot-welding method for metal materials

The solid-phase spot-welding method for metal materials of the present invention includes a welding preparation step in which two or more metal plate materials are held in a state in which same overlap one another, thereby forming an interface to be welded, a temperature raising step in which a temperature of the interface to be welded is raised by energization in the direct method, the indirect method or the series method by using a pair of electrodes to form a softened region in the vicinity of the interface to be welded, and a stress application step in which an external stress greater than or equal to the yield strength of the metal plate materials at a desired welding temperature is applied to the softened region, wherein the metal plate materials are welded to each other by subjecting the softened region to local deformation. Hereinafter, each step will be described in detail, taking as a typical example the case where the pressing part is provided inside the welding electrode.

### (1-1) Welding preparation step

In the welding preparation step, two or more metal plate materials are sandwiched in a state in which same overlap one another, thereby forming an interface to be welded. Two or more metal plate materials may be contact with each other in a state in which same overlap one another at least in the region to be welded, and may be fixed so as not to move in the welding process.

FIG. 2 is a schematic cross-sectional view which shows one embodiment of the welding preparation step when using the direct method. The metal plate material 2 and the metal plate material 4 are overlapped together to form the interface to be welded 6, and the metal plate material 2 and the metal plate material 4 are sandwiched between the welding electrode 8 and the welding electrode 10 from above and below the interface to be welded 6. Here, in FIG. 2, the positions of the metal plate material 2 and the metal plate material 4 are fixed only by the welding electrode 8 and the welding electrode 10, but an appropriate fixing jig may be used other than those. The welding electrode in the present invention does not melt the material to be welded like a normal welding electrode but is for raising the temperature of the region to be welded through the energization.

Further, in FIG. 2, although the pressing part 12 is provided inside the welding electrode 8 which is arranged on the surface of the metal plate material 2, the pressing part 12 may be provided only on the welding electrode 10, or the pressing parts 12 may be provided on both the welding electrode 8 and the welding electrode 10. In the welding preparation step, the pressing part 12 is controlled so as not to go out of the welding electrodes 8 and 10.

The purpose of the pressing force applied from the welding electrode in the welding preparation step is to bring the metal plate material 2 and the metal plate material 4 into close contact with each other, and about 0.1 to several MPa is sufficient as in normal resistance spot-welding. Further, the material, shape and size of the welding electrode 8 and the welding electrode 10 are not particularly limited, and the same electrodes as the various conventionally known resistance spot-welding electrodes can be used, but when the pressing part 12 is provided inside, it is necessary to form a through hole.

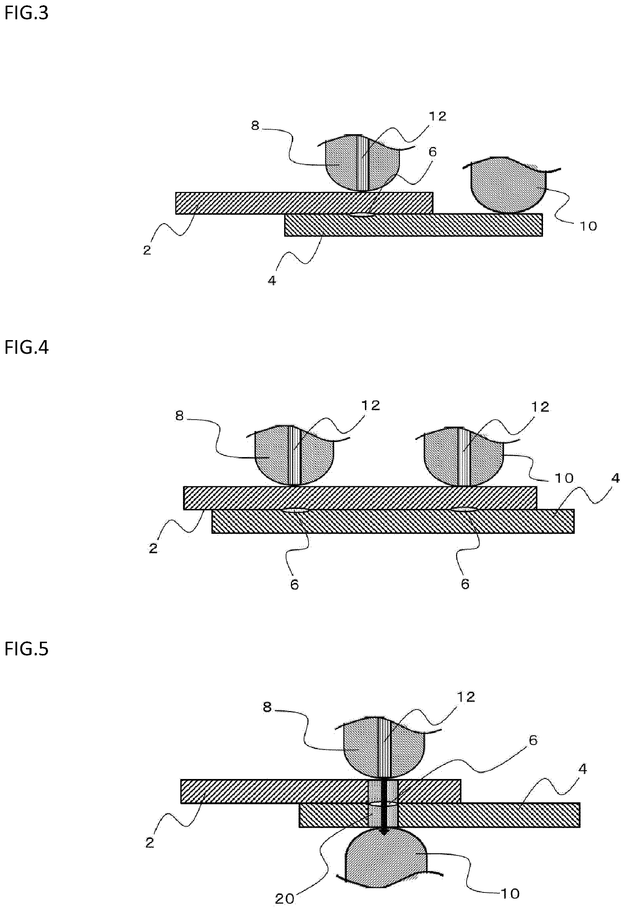

FIG. 3 is a schematic cross-sectional view which shows one embodiment of the welding preparation step when using the indirect method. The metal plate material 2 and the metal plate material 4 are overlapped together to form the interface to be welded 6, the welding electrode 8 is brought into contact with the metal plate material 2 from above the interface to be welded 6 (the metal plate material 2 side), and the welding electrode 10 is brought into contact with the area of the metal plate material 4 where the metal plate material 2 is not overlapped. In this case, since the welding electrode is not arranged on the lower side of the interface to be welded 6 (the metal plate 4 side), in order to withstand the stress applied by the welding electrode 8 and the pressing part 12, it is necessary to support the lower side of the interface to be welded 6 (the metal plate 4 side) by an appropriate jig or the like or to impart sufficient strength to the metal plate material 4 itself.

FIG. 4 is a schematic cross-sectional view which shows one embodiment of the welding preparation step when using the series method. Overlapping procedure of the metal plate material 2 and the metal plate material 4 is the same as in other energization methods, but when the series method is used, the interface to be welded 6 is formed at two positions. In the case of the series method, since the welding electrode 8 and the welding electrode 10 are brought into contact with from one side of the metal plate materials, it is necessary to support the metal plate materials 2 and 4 by means other than the welding electrodes. Further, since the heating portions are formed on the lower side of both welding electrodes, it is necessary to provide the pressing parts 12 on both the welding electrode 8 and the welding electrode 10.

### (1-2) Temperature raising step

The temperature raising step is a step of raising the temperature of the interface to be welded 6 by the energization by using the welding electrode 8 and the welding electrode 10 to form a softened region in the vicinity of the interface to be welded 6.

FIG. 5 is a schematic cross-sectional view which shows one embodiment of the temperature raising step when using the direct method (the arrow in the drawing indicates current flow). When the direct method is used, the welding electrode 10 arranged to oppose the welding electrode 8 is energized, and the softened region 20 is formed in the vicinity of the interface to be welded 6. Here, in the case of the direct method, since it is easy to control the state of the current not only by the welding electrode 8 but also by the welding electrode 10, the region where the pressure is applied by the pressing part 12 (the surface of the metal plate material to the interface to be welded 6) can be accurately softened. Here, in the solid-phase spot-welding method of the metal material of the present invention, the region that will eventually become the welding interface does not melt, but for example, when a flux or the like is arranged at the interface, the flux or the like is melted, which is included in the technical scope of the present invention. Further, for example, when dissimilar materials are welded, there is a case that a compound having a low melting point may be yielded at the interface to be welded, but, when the molten region is finally discharged from the welded interface, this case is included in the technical scope of the present invention.

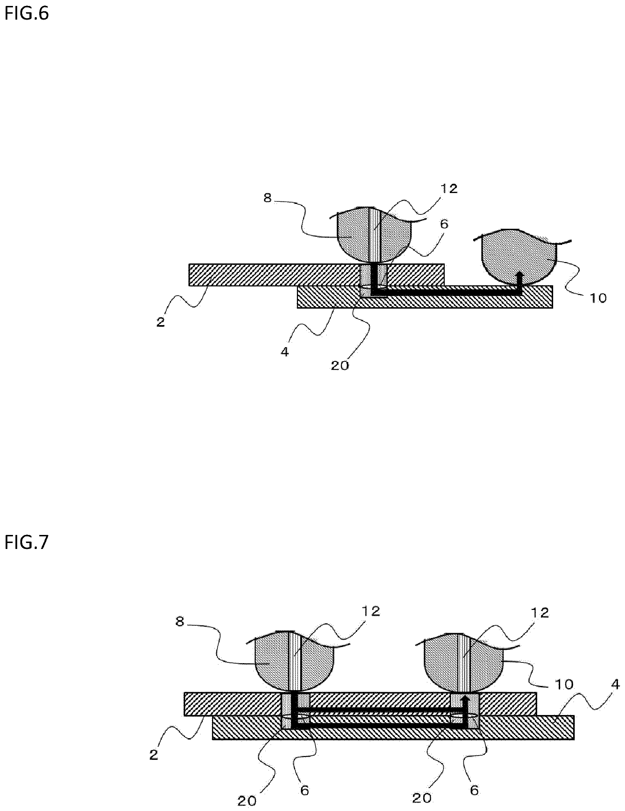

FIG. 6 is a schematic cross-sectional view which shows one embodiment of the temperature raising step when using the indirect method (the arrow in the drawing indicates current flow). When the indirect method is used, it is not necessary to arrange the welding electrode 10 corresponding to the welding electrode 8, so that it is suitably used, for example, when there is no space for arranging the welding electrode 10 below the metal plate material 4. When the indirect method is used, the softened region 20 is formed below the welding electrode 8.

FIG. 7 is a schematic cross-sectional view which shows one embodiment of the temperature raising step when using the series method (the arrow in the drawing indicates current flow). When the series method is used, the temperature of the interfaces to be welded 6 below the welding electrode 8 and the welded electrode 10 can be raised at the same time, and the softened regions 20 can be efficiently formed. Here, since it is necessary to pressurize the softened regions 20 at the two locations, both the welding electrode 8 and the welding electrode 10 are provided with the pressing part 12.

The current value to be energized may be constant, but since the adhesion state between the surfaces of the metal plate materials 4 at the interface to be welded 6 changes momentarily due to temperature rise and pressing, it is preferable that the current value should be increased as the adhesion area increases. The current value may be increased in multiple steps or may be continuously increased. According to the constant current density control where the current value of the energization increases as the contact area at the interface to be welded 6 increases, the temperature in the vicinity of the interface to be welded 6 can be raised uniformly to a desired welding temperature in a short time.

### (1-3) Stress application step

The stress application step is a step where an external stress greater than or equal to the yield strength of the metal plate materials (2, 4) at a desired welding temperature is applied to the softened region 20. The stress application step will be described as a typical example when the energization by the direct method is used.

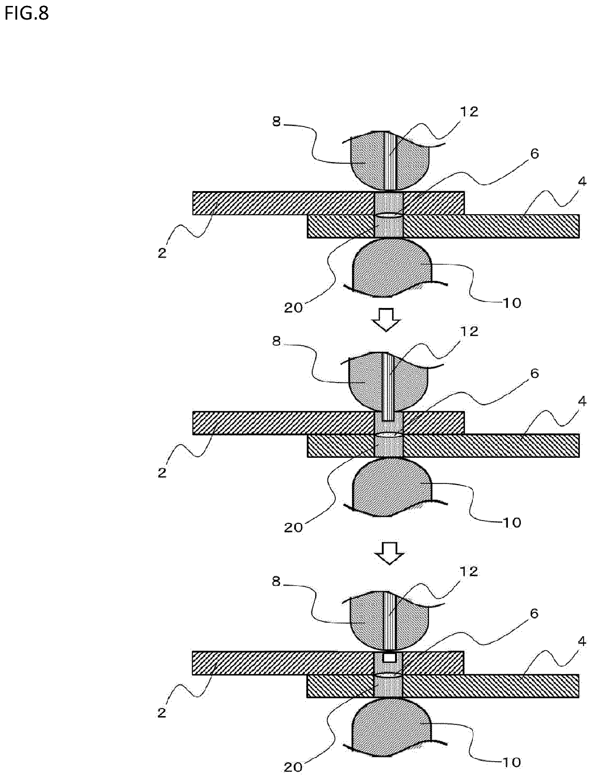

FIG. 8 is a schematic cross-sectional view which shows one embodiment of the stress application step in the case that the pressing part is provided with only one welding electrode in the direct method. By pushing the pressing part 12 into the softened region 20 from the surface side of the metal plate material 2, the vicinity of the interface to be welded 6 is locally deformed, and solid-phase welding is achieved by the contact of the new surfaces with each other. In this case, a recess portion is formed on the surface of the metal plate material 2 into which the pressing part 12 is pushed. Here, it is preferable that the external load on the pressing part 12 is applied before the energization. Even if the recess portion is formed on the surface of the metal plate material 2, when the external stress is applied to the welded portion, by making the shortest distance from the crack generation position to the surface of the recess portion longer than the plate thickness of the material to be welded, the strength and reliability of the welded portion can be sufficiently ensured.

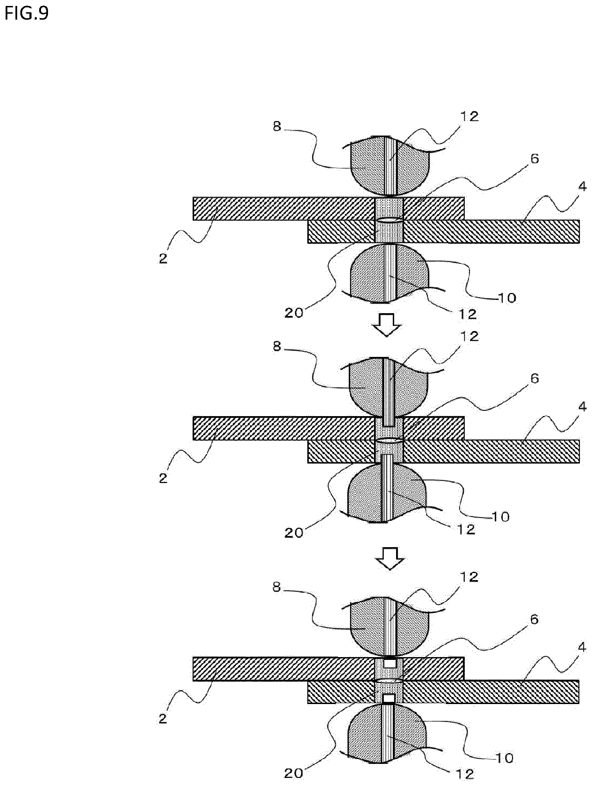

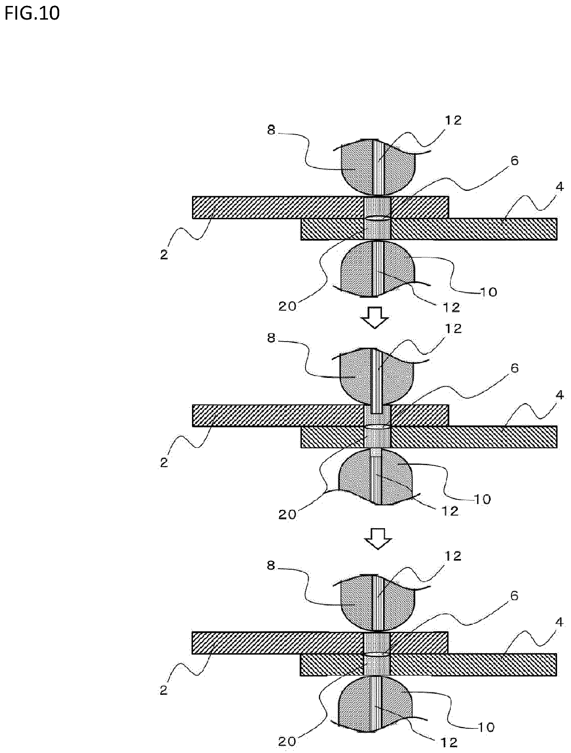

FIG. 9 and FIG.10 are schematic views which show one embodiment of the stress application step when both welding electrodes are provided with the pressing parts in the direct method. When both the welding electrode 8 and the welding electrode 10 are provided with the pressing part 12, mainly, there are a pattern (pattern 1) in which the two pressing parts 12 are simultaneously pressed into the softened region 20 from the surface of the metal plate material, and a pattern (pattern 2) in which, after the other pressing part 12 is pulled into the welding electrode in accordance with the pushing of one pressing part 12, both the pressing parts 12 are moved to the surface of the metal plate material. FIG. 9 shows a schematic cross-sectional view showing one embodiment of pattern 1, and FIG. 10 shows a schematic cross-sectional view showing one embodiment of pattern 2.

In the pattern 1, the pressing part 12 provided on the welding electrode 8 is pushed into the softened region 20 from the surface of the metal plate material 2, and at the same time, the pressing part 12 provided on the welding electrode 10 is pushed into the softened region 20 from the surface of the metal plate material 4. As a result, as compared with the case where the pressing part 12 is pushed from one side, the local deformation in the vicinity of the interface to be welded 6 is promoted to be able to form the welded portion more effectively. In this case, the recess portions are formed on the surfaces of the metal plate material 2 and the metal plate material 4 into which the pressing parts 12 are pushed.

Further, in the pattern 2, the pressing part 12 provided on the welding electrode 8 is pushed into the softened region 20 from the surface of the metal plate material 2, and the pressing part 12 provided on the welding electrode 10 is pulled down inside the welding electrode 10. When providing the recess portion below the pressing part 12 to be pushed, the effect of the pressing is promoted, and in addition, since the interface to be welded 6 is bent, a stronger welded interface can be obtained. Here, the distance at which the pressing part 12 is pulled down to the welding electrode 10 is not particularly limited as long as the effect of the present invention is not impaired, and may be appropriately determined in consideration of the strength and appearance of the welded portion, and is preferable to make it about the same as the pushing distance of the pressing part 12.

In addition, in the pattern 2, since the upper and lower pressing parts 12 are finally located on the surface of the metal plate materials (2, 4), the formation of recess portions on the surface of the metal plate materials (2, 4) are suppressed, and it is possible to obtain a smooth surface of the welded portion.

Further, although not shown in the drawing, it is preferable that a cylindrical molding jig arranged so as to include the welding electrodes (8, 10) is provided, and after the stress application step, the molding jig is pushed from the surfaces of the metal plate materials (2, 4) to reduce the gap between the metal plate materials caused by the local deformation due to the pushing of the pressing part 12. On the other hand, when a large pressure is applied by the molding jig before the stress application step, since the space for the locally deformed material to move decreases, it is preferable to adjust appropriately the pressure and the application timing according to the local deformation behavior.

The external load to push the pressing part 12 may be constant, but since the adhesion state between the surfaces of the metal plate materials 4 at the interface to be welded 6 changes momentarily due to temperature rise and pressing, it is preferable that the external load should be increased as the adhesion area increases. The external load may be increased in multiple steps or may be continuously increased. According to the constant external stress control where the external stress increases as the contact area at the interface to be welded 6 increases, it is possible to control the welding temperature determined by the external stress more accurately. Further, when the current value of the energization is constant, there is a case that the pushing of the pressing part 12 is difficult due to the decrease in current density due to the increase in the contact area, but, by increasing the external load, the pressing part 12 can be smoothly pushed.

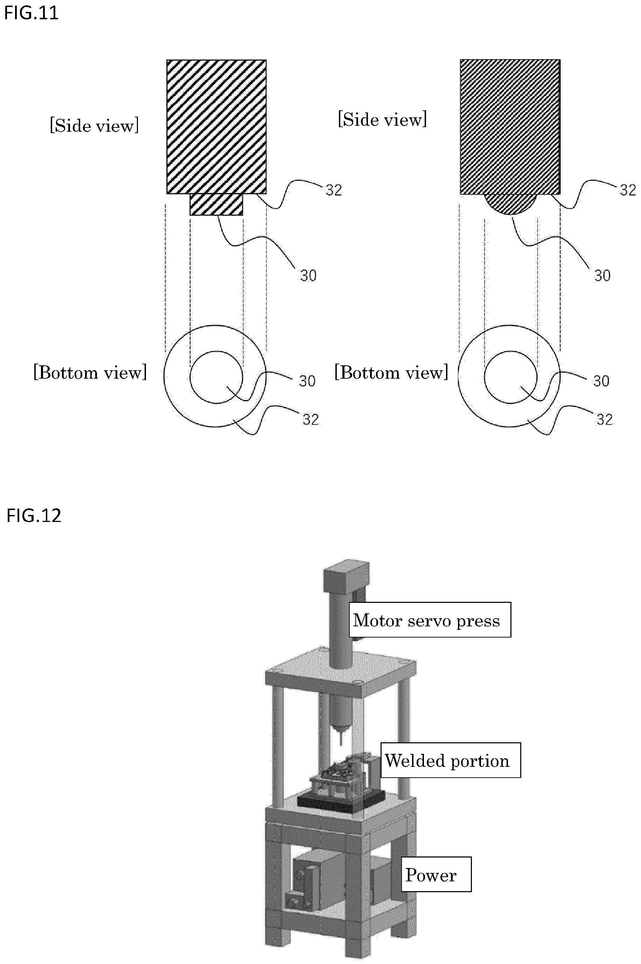

FIG. 11 shows a schematic diagram of a typical shape of the pressing part 12. A protrusion portion 30 is provided on the bottom surface of the pressing part 12, and after the protrusion portion 30 is pressed from the surface of the metal plate material 2, the bottom surface portion 32 is pressed. Since the protruding portion 30 has a smaller area than the entire bottom surface including the bottom surface portion 32, it can be smoothly pushed into the metal plate material 2. In addition, the material extruded from the interface to be welded 6 by pushing the protrusion portion 30 is crushed by the bottom surface portion 32 and discharged from the interface to be welded 6, so that a good welded portion can be obtained.

### (2) Solid-phase spot-welding device for metal material

The solid-phase spot-welding device for metal material of the present invention is characterized by having an energization mechanism including a pair of electrodes capable of energization by a direct method, an indirect method or a series method, and a pressurizing mechanism capable of applying pressure to the interface to be welded of the metal plate material heated by the energization mechanism. Hereinafter, the case where the direct method is used will be described as a typical example.

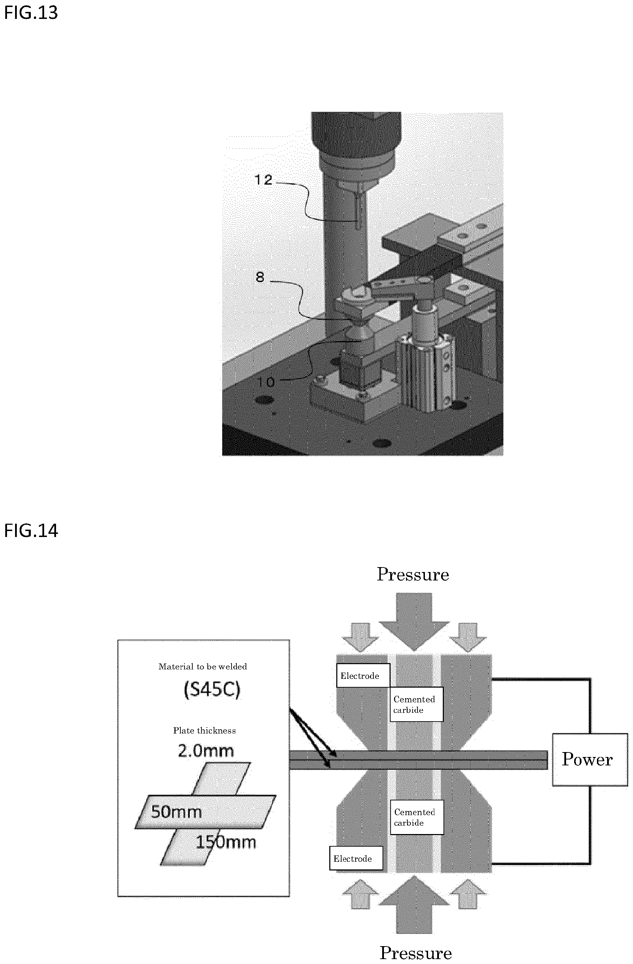

FIG. 12 is a schematic view which shows one embodiment of the solid-phase spot-welding device when the direct method is used. Further, FIG. 13 is an enlarged view of the vicinity of the welding electrode of the solid-phase welding device shown in FIG. 12. The energization mechanism includes the welding electrode 8 and the welding electrode 10, and is composed of a welding power supply, a bus bar, various control devices, and the like, similarly to a conventional general resistance spot welder. Further, the pressurizing mechanism is a mechanism for moving the pressing part 12 up and down with a servo press machine. Here, a through hole is provided in the center of the welding electrode so that the pressing part 12 can be inserted.

It is preferable that the tip of the pressurizing mechanism (tip of the pressurizing part 12) in contact with the metal plate material is ceramics. The pressurizing mechanism is required to have the ability to locally deform the softened region 20 to form the new surface at the interface to be welded 6 and to have a long life. Here, by using ceramics for the tip of the pressurizing mechanism, while ensuring sufficient strength and hardness, it is possible to suppress the adhesion of the material to be welded and the reaction with the material to be welded. Bulk materials of the ceramics may be used for the tip of the pressurizing mechanism, and for example, a ceramic film may be formed on the surface of the tool steel.

Further, it is preferable that the temperature in the vicinity of the interface to be welded 6 can be raised to 300 to 1000 °C by the energization mechanism, and the pressure can be controlled in the range of 100 to 1200 MPa by the pressurizing mechanism. By raising the temperature of the interface to be welded 6 to 300 to 1000 °C, with respect to of various metal plate materials (2, 4), it is possible to sufficiently lower the strength so as to cause local deformation by applying an external force (100 to 1200 MPa) to the interface to be welded 6 by a small pressurizing mechanism (press machine).

Further, in the solid-phase spot-welding device for a metal plate material of the present invention, it is preferable that the pressure is the flow stress of the metal plate material (2, 4) at the welding temperature by setting the desired welding temperature. By using the flow stress of the metal plate material (2, 4) at the welding temperature as the external stress, the continuous deformation in the vicinity of the interface to be welded 6 is started at the set welding temperature, and the solid-phase welding due to abutment between the new surfaces can be achieved stably with the minimum pressure. Here, when the materials of the metal plate material 2 and the metal plate material 4 are different, it is preferable to set the applied pressure at which local deformation occurs in both metal plate materials.

The temperature dependence of the flow stress is unique to each metal material, and when the solid-phase spot-welding device keeps the flow stress at each temperature as a database to set the type of metal material and the desired welding temperature, the corresponding pressure can be determined. It is preferable to record at least a database of various iron-based materials in the solid-phase spot-welding device.

Further, in the solid-phase spot-welding device for a metal plate material of the present invention, it is preferable that the welding electrode (8, 10) has a substantially cylindrical shape and the pressurizing mechanism is arranged inside or around the welding electrode (8, 10). Further, it is more preferable that the pressurizing mechanism is arranged inside the welding electrode (8, 10). By having the pressurizing mechanism inside the welding electrode (8, 10) having a substantially cylindrical shape, it is possible to efficiently apply the external stress to the softened region 20 (interface to be welded 6) heated by the energization of the welding electrode (8, 10). In addition, since the welding electrode (8, 10) and the pressurizing mechanism can be compactly integrated, the mechanism for contacting the metal plate material (2, 4) can be miniaturized. Here, it is preferable that the shape and specifications of the welding electrode (8, 10) are designed so that the surface of the metal plate material (2, 4) to the interface to be welded 6 can be uniformly heated. By uniformly softening not only the interface to be welded 6 but also the surface of the metal plate material (2, 4) to the interface to be welded 6, the local deformation by the pressurizing mechanism can be easily achieved.

Further, in the solid-phase spot-welding device for the metal plate material of the present invention, it is preferable to have the mechanism which suppresses the change in the welding temperature by the following (1) and/or (2).
(1) Constant current density control where the current value of the energization increases as the contact area at the interface to be welded increases
(2) Constant external stress control where the external load in the stress application step increases as the contact area at the interface to be welded increases

According to the constant current density control where the current value of the energization increases as the contact area at the interface to be welded 6 increases, the temperature in the vicinity of the interface to be welded 6 can be raised to a desired welding temperature in a short time and uniformly. In addition, according to the constant external stress control where the external load in the stress application step increases as the contact area at the interface to be welded 6 increases, the desired welding temperature can be controlled more accurately. The specific controlling mechanisms of constant current density control and the constant external stress control are not particularly limited as long as the effects of the present invention are not impaired, and various conventionally known controlling mechanisms can be used. For example, the controlling mechanisms which can set the current value and the external load in multiple stages may be employed.

Furthermore, in the solid-phase spot-welding device for a metal plate material of the present invention, it is preferable to have a protrusion on the bottom surface of the tip of the pressing part 12. The typical shape of the pressing part 12 is schematically shown in FIG. 11, and by inserting the protrusion 30 into the region to be welded and then further pressing with the bottom portion 32, the plastic deformation in the vicinity of the interface to be welded 6 can be promoted, and the formation of defects can be suppressed. Further, when it is desired to provide a convex portion on the metal plate material 2 as a preliminary treatment for welding, the protruding portion 30 can be used for plastic working. The shape of the bottom surface of the tip portion is not particularly limited as long as the effect of the present invention is not impaired, and for example, a shape proposed as a friction stir welding tool or a metal processing tool can be used.

Although the typical embodiments of the present invention have been described above, the present invention is not limited to these, and various design changes are possible, and all of these design changes are included in the technical scope of the present invention.

### EXAMPLE

### « Solid-phase spot-welding by constant external load »

A medium carbon steel (JIS-S45C) plate of 150 mm × 50 mm × 2 mm was used as the material to be welded, and was subjected to the solid-phase spot-welding of the present invention. The medium carbon steel sheet material has a ferrite pearlite structure. Two medium carbon steel materials were superposed in a cross shape and welded by the solid-phase spot-welding of the present invention.

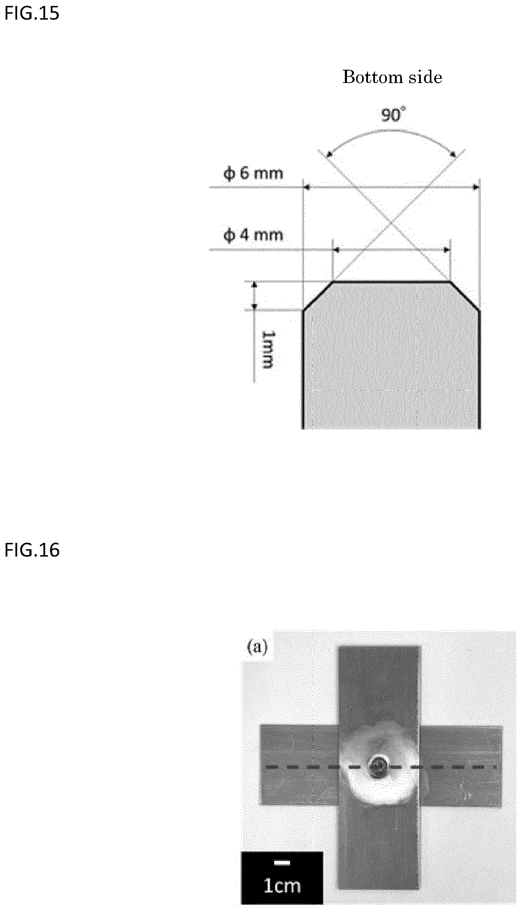

FIG. 14 shows a schematic cross-sectional view in the vicinity of the electrode of the solid-phase spot-welding device used for solid-phase spot-welding. The solid-phase spot-welding device includes a central pressure shaft (pressing part) and a cylindrical copper electrode for energization. The central pressure shaft is made of cemented carbide, and the welded region can be pressed by an AC servo press machine having a maximum applicable thrust of 40 kN. A schematic diagram of the central pressure shaft is shown in FIG. 15. Further, the cylindrical copper electrode can apply a light load by an air cylinder, and is controlled by a drive separate from the central pressure shaft. As a power source for energizing the copper electrode, IS-300A available from Amada Miyachi Co., Ltd., which can energize at 5000 A for a maximum of 9 seconds, was used.

The materials to be welded were sandwiched from above and below with the pressure of the copper electrode set to 3.4 kN, and the materials to be welded were fixed. Next, a current of 3500 to 5000 A was applied from the copper electrode to heat the materials to be welded, and the central pressure shaft was pushed from above and below the welded region at a pressure of 1000 MPa.

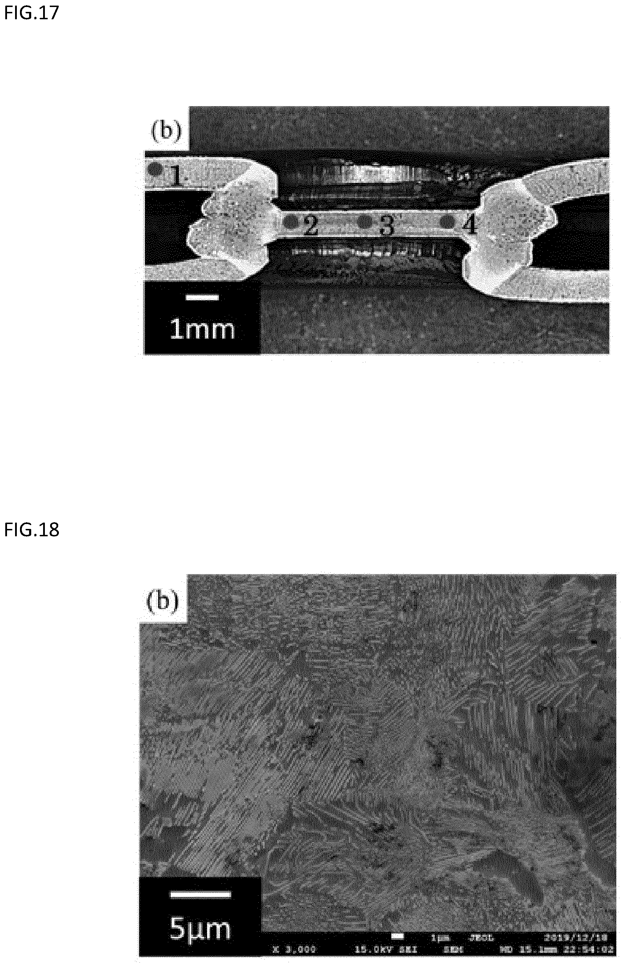

FIG. 16 shows an appearance photograph of the joint obtained with a current value of 4500 A and an energization time of 2 seconds. It can be seen that a spot-welded portion is formed in the center of the material to be welded. FIG. 17 shows a macro photograph of a cross section of the spot-welded portion cut along the dotted line in the drawing. The upper and lower portions of the welded portion are concave due to the pressure from the central pressure shaft, and since no molding jig is used, the periphery of the welded portion is in a raised state.

When the hardness was measured with a Micro Vickers hardness tester for each of the points 1 to 4 shown in FIG. 17, the results were the hardness of the measurement point 1: 243 HV, measurement point 2: 265 HV, measurement point 3: 281 HV, and measurement point 4: 274 HV. It can be seen that the measurement point 1 is the base material and the measurement points 2 to 4 are the welded portions, and the welded portions have the same hardness as the base material. This result means that the martensitic transformation due to the heat input during the welding did not occur at the welded portion. The Vickers hardness measurement was performed under the conditions of a load of 0.1 kgf and a load loading time of 15 s.

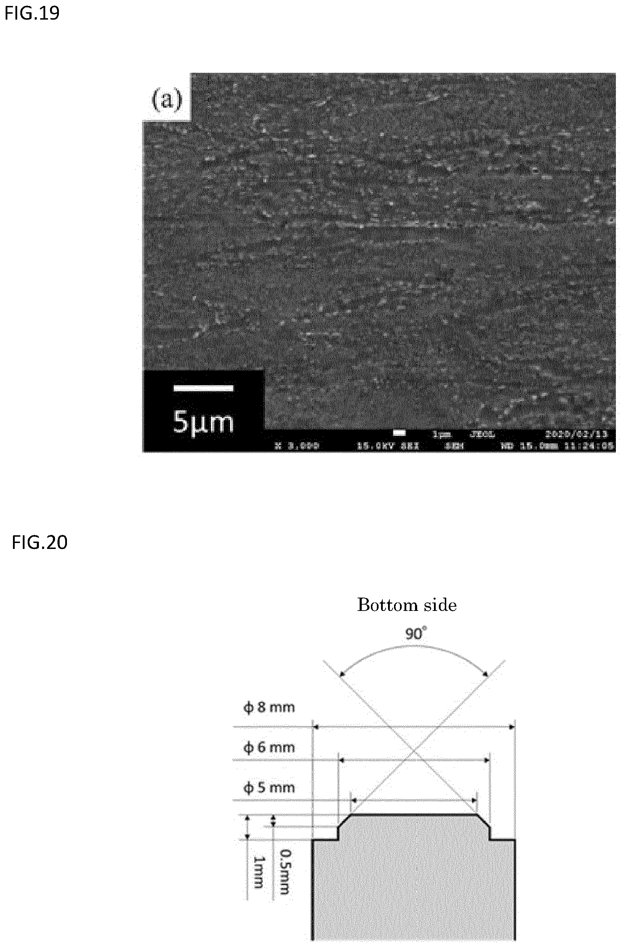

Microstructure observation was performed on the base material (measurement point 1) and the welded portion (measurement point 2) by using a scanning electron microscope (SEM). JSM-7001FA available from JEOL Ltd. was used as the SEM. The SEM images of the base metal and the welded portion are shown in FIG. 18 and FIG. 19, respectively. The base metal has a ferrite pearlite structure typical of medium carbon steel. On the other hand, cementite is finely distributed at the welded portion, and ferrite particles also exist in a flat shape. Further, a part of the cementite is spheroidized. This is a result of the pearlite being finely divided and the ferrite particles being flattened due to the plastic deformation caused by pressing the central pressure shaft. Further, it is also considered that spherical cementite was deposited due to the influence of heating by the energization. These results indicate that the solid-phase spot-welding method of the present invention achieved spot-welding at the A₁ point or less without martensitic transformation.

### « Solid-phase spot-welding by multi-step load control »

A plate material of a medium carbon steel of 150 mm × 50 mm × 1.6 mm (JIS-S45C) as a material to be welded was subjected to the solid-phase spot-welding by using a central pressure shaft having the shape shown in Fig. 20, at the current value of any of 3250 A, 3500 A, or 3750 A. As the welding process, (1): the plate materials to be welded are sandwiched between the copper electrodes, and (2): an arbitrary set load is applied to the copper electrodes. After that, (3): the set load of the first stage is applied to the central pressure shaft. (4): Energization is started while the pressure is applied, the temperature rises at the interface to be welded, and the material is deformed. (5): Deformation progresses, and when the deformation of the set first-stage burn-off length (pushing amount set value of the central pressure shaft) is completed, (6): the set load of the second stage with respect to the central pressure shaft is applied. (7): Repeat the processes of (5) and (6) to increase the load up to the ninth stage. Table 1 shows the actually set applied load and the value of the burn-off length. By continuously performing the first to ninth steps without interruption, the welding can be completed as if it were one process.

**[Table 1]**

| | Applied load[kN] | burn-off length[mm] |
|---|---|---|
| 1st stage | 12 | 0.1 |
| 2nd stage | 14 | 0.2 |
| 3rd stage | 16 | 0.3 |
| 4th stage | 20 | 0.5 |
| 5th stage | 24 | 0.7 |
| 6th stage | 28 | 0.9 |
| 7th stage | 32 | 1.1 |
| 8th stage | 36 | 1.3 |
| 9th stage | 40 | 1.4 |

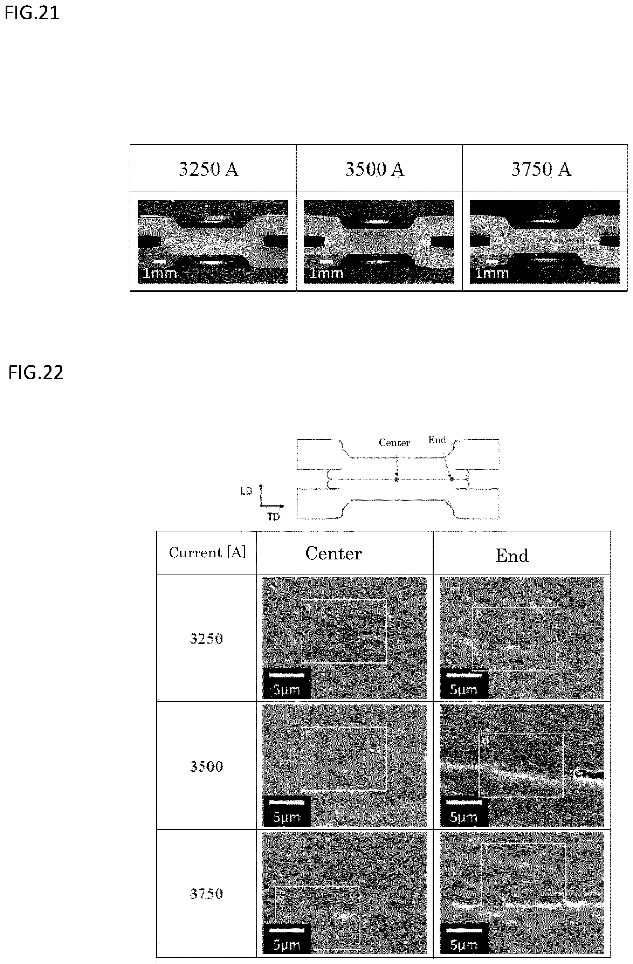

As shown in Table 1, a cross-sectional photograph of the joint obtained by changing the load and each current value is shown in FIG. 21. The diameter of the welded interface increases as the current value increases. Further, FIG. 22 shows the microstructure at the welded interface of each joint. At any current value, the microstructure at the center was the structure composed of ferrite and pearlite, which was similar to the base metal. Fine ferrite particles were present in the vicinity of the welded interface. It is considered that this is because a huge strain was introduced by applying a large load and the temperature of the welded portion increased, resulting in dynamic recrystallization. Further, around the vicinity of the welded interface, fine cementite was distributed in the vicinity of the welded interface, and a part of cementite was spheroidized. It is considered that this is because the pearlite was finely divided by the plastic deformation caused by the pressing of the central pressure shaft and spheroidized by the temperature rise due to the energization. The microstructure at the end of the welded interface was a structure composed of ferrite and pearlite similar to that at the center under the conditions of current values of 3250 A and 3500 A. Unlike the central part, fine cementite particles are reduced in the vicinity of the welded interface. It is considered that cementite was dissolved as the temperature rise.

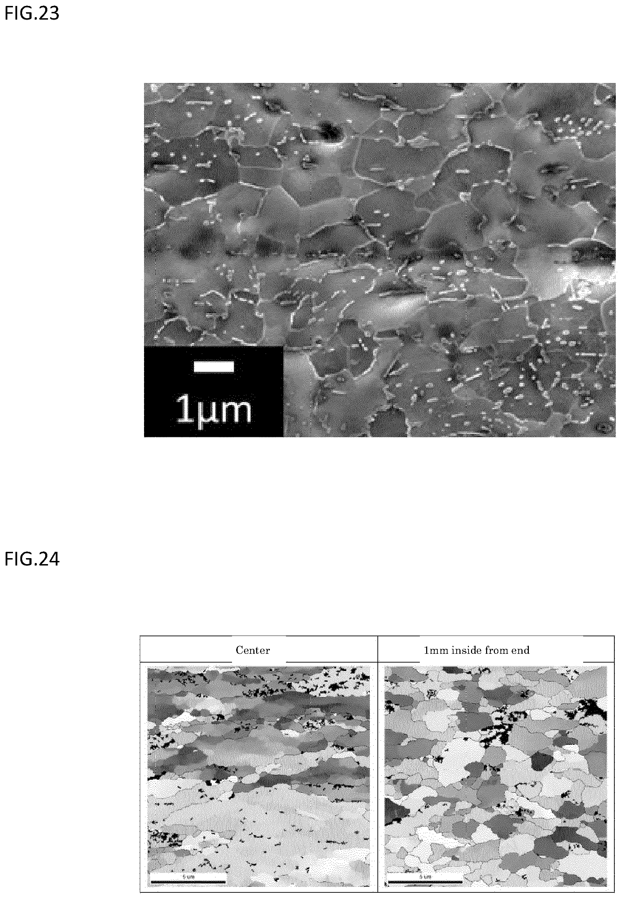

FIG. 23 shows an SEM photograph taken in a region 1 mm inside from the end portion of the joint obtained under the condition of a current value of 3750 A. In this region, it can be confirmed that a structure composed of ferrite and cementite is formed.

FIG. 24 shows a crystal orientation map (IPF) in a region 1 mm inner from the center and end portion. The average crystal particle size at the end portion was 1.7 µm. Since the average crystal particle size of the base metal is about 14 µm, it is considered that miniaturization due to the dynamic recrystallization occurred. The distribution of fine particles at the end portion was confirmed not only in the vicinity of the welded interface but also in the region away from the interface, which indicates that the dynamic recrystallization occurred over a wide range. On the other hand, in the central part, the dynamic recrystallization occurred only in the immediate vicinity of the interface. Since the dynamic recrystallization is generally promoted at a higher temperature or a higher strain, and the temperature at the end portion is higher than that at the center, the dynamic recrystallization is promoted to form the fine structures.

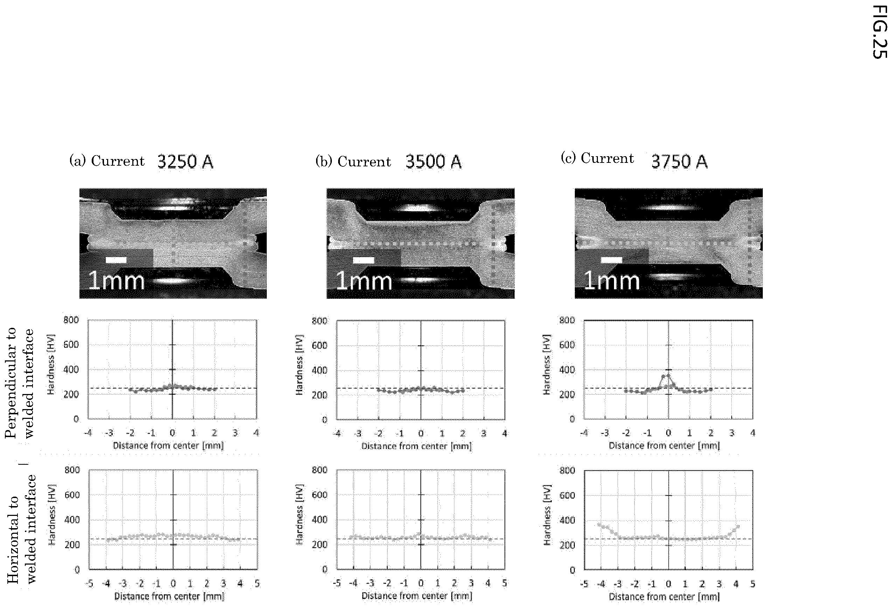

FIG. 25 shows the hardness distribution of the joint cross section obtained at each current value. The measurement of the hardness distribution was carried out along the dotted line on the cross-sectional photograph shown in FIG. 25. The average hardness of the base metal is shown by the dotted line. Under the conditions of all current values, the hardness at the center of the welded portion was about 250 HV, which was equivalent to that of the base metal, and it is considered that the temperature at the center did not reach the temperature of not less than the A₁ point.

The hardness of the end portion under the conditions of the current values of 3250 A and 3500 A was about 250 HV, which was equivalent to that of the base metal. From this result, it can be confirmed that under the conditions of 3250 A and 3500 A, the welding at the A₁ point or less can be achieved without the martensitic transformation in the entire welded portion. The hardness of the end portion under the condition of the current value of 3750 A was about 380 HV, which was higher than that of the base metal. Since the microstructure of the end portion under this welding condition was ferrite and martensite, it is considered that the hardness increased at the end portion due to the formation of hard martensite. The region where the hardness has increased is a width of about 1 mm from the end portion, which is a very narrow region.

Table 2 shows the shear tensile strength of the joint obtained under each welding condition by using the multi-step load control. As the current value increases, the shear tensile strength improves. By increasing the current value, the vicinity of the interface to be welded is rapidly softened, and the plastic deformation due to the pushing of the central pressure shaft promotes the close contact between the new surfaces. Here, it is considered that one of the causes which contributes to the improvement of the strength is that the plastic deformation is sufficiently performed by rapidly achieving the temperature rise in the vicinity of the interface to be welded and the welding area is increased.

**[Table 2]**

| Current value [A] | 3250 | 3500 | 3750 |
|---|---|---|---|
| Shear tensile strength test [kN] | 9.4 | 14.8 | 15.9 |

In the case of the melt welding, in a material that does not cause brittleness and has a tensile strength (720 MPa) equivalent to that of the medium carbon steel (JIS-S45C) used as the material to be welded this time, the predicted value of the shear tensile strength of the resistance spot-welded joint having a nugget diameter of 5√t is 15.8 kN (Japan Welding Society Proceedings, vol. 14, No. 4, p. 754-761 (1996)). By the solid-phase welding method of the present invention, a value equal to or higher than this is obtained, and by using the solid-phase welding method of the present invention, it is understood that a good welded portion can be obtained even in the medium carbon steel in which the melt welding is extremely difficult.

### Explanation of symbols

- 2, 4: Metal plate material,
- 6: Interface to be welded,
- 8, 10: Welding electrode,
- 12: Pressing part,
- 20: Softened region,
- 30: Protrusion,
- 32: Bottom portion.

## Claims

1. A solid-phase spot-welding method of metal plate materials which is a solid-phase welding method where overlapping metal plate materials and carrying out spot-welding, and is **characterized in that** the method includes
a welding preparation step in which two or more metal plate materials are held in a state in which same overlap one another, thereby forming an interface to be welded,
a temperature raising step in which a temperature of the interface to be welded is raised by energization by a pair of electrodes to form a softened region in the vicinity of the interface to be welded, and
a stress application step in which an external stress greater than or equal to the yield strength of the metal plate materials at a desired welding temperature is applied to the softened region,
wherein the metal plate materials are welded to each other by subjecting the softened region to local deformation.

2. The solid-phase spot-welding method for a metal plate material according to claim 1, wherein
the external stress is applied by a pressing part arranged inside or around at least one of the electrodes.

3. The solid-phase spot-welding method for a metal plate material according to claim 1 or 2, wherein
the external stress is the flow stress of the metal plate material at the welding temperature.

4. The solid-phase spot-welding method for a metal plate material according to any one of claims 1 to 3, wherein
the energization in the temperature raising step is a direct method, an indirect method, or a series method.

5. The solid-phase spot-welding method for a metal plate material according to any one of claims 1 to 4, wherein
a convex portion is provided on at least one of the metal plate materials, and
the interface to be welded is formed by bringing the convex portion into contact with the other metal plate.

6. The solid-phase spot-welding method for a metal plate material according to any one of claims 1 to 5, wherein
the temperature of the surface of the metal plate material is lowered in the stress application step by cooling after the temperature rise.

7. The solid-phase spot-welding method for a metal plate material according to any one of claims 1 to 6, wherein
there provide a cylindrical molding jig arranged so as to include the electrode, and after the stress application step, the molding jig is pressed against the metal plate material to reduce the gap between the metal plate materials caused by the local deformation.

8. The solid-phase spot-welding method for a metal plate material according to any one of claims 1 to 7, wherein
the metal plate material contains an iron-based metal plate material and
the welding temperature is set to A₁ point or less of the iron-based metal plate material.

9. The solid-phase spot-welding method for a metal plate material according to any one of claims 1 to 8, wherein the welding is a dissimilar material welding.

10. The solid-phase spot-welding method for a metal plate material according to any one of claims 1 to 9, wherein
the change in the welding temperature is suppressed by the following (1) and/or (2):
(1) Constant current density control where the current value of the energization increases as the contact area at the interface to be welded increases
(2) Constant external stress control where the external load in the stress application step increases as the contact area at the interface to be welded increases

11. The solid-phase spot-welding method for a metal plate material according to any one of claims 2 to 10, wherein
the pressing part has a protrusion on the bottom surface of the tip portion.

12. A solid-phase spot-welding device for metal plate materials, which comprises:
an energization mechanism including a pair of electrodes capable of energization by a direct method, an indirect method or a series method, and
a pressurizing mechanism capable of applying pressure to the interface to be welded of the metal plate material heated by the energization mechanism.

13. The solid-phase spot-welding device according to claim 12, wherein
the tip of the pressurizing mechanism in contact with the metal plate material is any of tool steel, cemented carbide, nickel-based alloy, cobalt-based alloy and ceramics.

14. The solid-phase spot-welding device according to claim 12 or 13, wherein
the temperature in the vicinity of the interface to be welded can be raised to 300 to 1000 °C by the energization mechanism, and
the pressure can be controlled in the range of 100 to 1200 MPa by the pressurizing mechanism.

15. The solid-phase spot-welding device according to any one of claims 12 to 14, wherein
the pressure is a flow stress of the metal plate material at the welding temperature by setting the desired welding temperature.

16. The solid-phase spot-welding device according to any one of claims 12 to 15, wherein
the electrode has a substantially cylindrical shape and the pressurizing mechanism is arranged inside or around the electrode.

17. The solid-phase spot-welding device according to any one of claims 12 to 16, which comprises a mechanism which suppresses the change in the welding temperature by the following (1) and/or (2).
(1) Constant current density control where the current value of the energization increases as the contact area at the interface to be welded increases
(2) Constant external stress control where the external load increases by the pressurizing mechanism as the contact area at the interface to be welded increases

18. The solid-phase spot-welding device according to any one of claims 13 to 17, wherein
the pressurizing mechanism has a protrusion on the bottom surface of the tip portion.
